# EUROPÄISCHE PATENTANMELDUNG

(11) **EP 3 185 235 A1**
(43) Veröffentlichungstag der Anmeldung: **28.06.2017**
(21) Anmeldenummer: 15201629.1
(22) Anmeldetag: 21.12.2015
(51) Int. Cl.: G09F 9/37, G09F 23/00

(54) **DARSTELLUNG VON SPEZIFISCHEN INFORMATIONEN AN EINER VORRICHTUNG**

(71) Anmelder: Siemens Aktiengesellschaft, 80333 München (DE)
(72) Erfinder: Namyslo, Lutz, 91353 Hausen (DE)

(57) **Zusammenfassung**

Die geeignete Darstellung von Informationen außen an einer Vorrichtung soll vereinfacht werden. Dazu wird eine Anordnung mit einer Vorrichtung (2) und einer Anzeigeeinrichtung (1), die ein Elektronisches Papier aufweist und an der Vorrichtung befestigt ist, vorgesehen. Die Anzeigeeinrichtung (1) weist ein Lokalisierungsmodul auf, mit dem eine Landesinformation über dasjenige Land ermittelbar ist, in dem sich die Anordnung aktuell befindet. Die Anzeigeeinrichtung (1) ist ferner dazu ausgebildet, vorgegebene Daten über die Vorrichtung spezifisch in Abhängigkeit von der Landesinformation darzustellen.

## Beschreibung

Die vorliegende Erfindung betrifft eine Anordnung mit einer Vorrichtung und einer Anzeigeeinrichtung, die ein Elektronisches Papier aufweist und an der Vorrichtung befestigt ist. Darüber hinaus betrifft die vorliegende Erfindung ein Verfahren zum Anzeigen einer Information über eine Vorrichtung mittels einer solchen Anzeigeeinrichtung.

Maschinen benötigen gemäß vorgegebener Richtlinien oder Normen eine eindeutige und vollständige Kennzeichnung. Daher tragen sie das sogenannte Typenschild (auch Leistungsschild genannt), den "Ausweis" eines technischen Produkts. Es informiert den Käufer, Anwender, Nutzer etc. über Hersteller, Baujahr, Zertifizierungen und Konformität und liefert wichtige technische Angaben wie etwa Leistungsdaten und Sicherheitshinweise. Gerade für die Sicherheitshinweise sind die Maschinen beziehungsweise Vorrichtungen mit entsprechenden länderspezifischen Warnhinweisschildern auszustatten.

Vorgaben zu Typen-/Leistungsschildern und Warn- und Sicherheitshinweisen sind unter anderem in folgenden Normen und Richtlinien zu finden:
- für in Europa hergestellte Maschinen allgemein in der Maschinenrichtlinie 2006/42/EG;
- für elektrische Maschinen (insbesondere Motoren) DIN EN 60034-1 und NEMA MG1;
- für drehzahlveränderliche Antriebe (inkludiert Frequenzumrichter) in DIN EN 61800-2.

Hierbei ist zu beachten, dass Motoren gegenwärtig nicht unter die Maschinenrichtlinie fallen ("unvollständige Maschine"). Für Frequenzumrichter ist die Maschinenrichtlinie anzuwenden, wenn sie mit sicherheitsrelevanten Funktionen ausgestattet sind (Functional Safety), was jedoch heute fast ausnahmslos Standard ist.

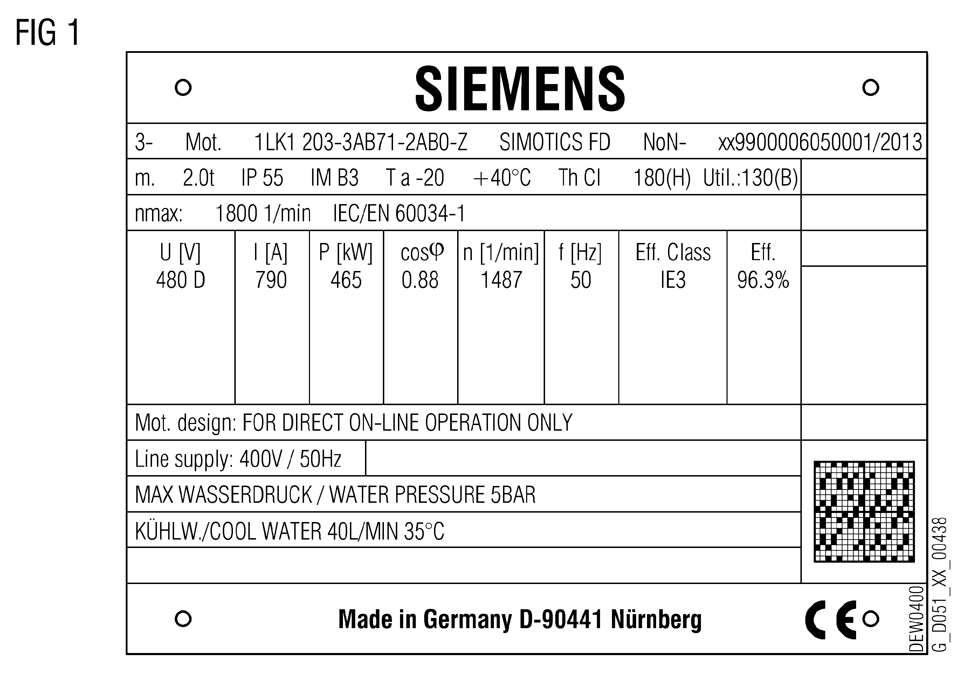

FIG 1 zeigt ein übliches Typenschild für einen Elektromotor. Es zeigt technische Informationen über den Elektromotor in deutscher/englischer Sprache. Diese Informationen sind von Personen, die der deutschen/englischen Sprache nicht mächtig sind, nicht lesbar, weswegen in der Regel die Typenschilder für jedes Land spezifisch zu gestalten sind.

Gemäß der Maschinenrichtlinie 2006/42/EG (Geltungsbereich Europa) gelten für Typenschilder folgende Anforderungen: "Auf jeder Maschine müssen mindestens folgende Angaben erkennbar, deutlich lesbar und dauerhaft angebracht sein:
- Firmenname und vollständige Anschrift des Herstellers und gegebenenfalls seines Bevollmächtigten,
- Bezeichnung der Maschine,
- CE-Kennzeichnung (siehe Anhang III),
- Baureihen- oder Typbezeichnung,
- gegebenenfalls Seriennummer,
- Baujahr, d.h. das Jahr, in dem der Herkunftsprozess abgeschlossen wurde.

Es ist untersagt, bei der Anbringung der CE-Kennzeichnung das Baujahr der Maschine vor- oder nachzudatieren."

"Informationen und Warnhinweise an der Maschine sollten vorzugsweise in Form leicht verständlicher Symbole oder Piktogramme gegeben werden. Alle schriftlichen oder verbalen Informationen und Warnhinweise müssen in der beziehungsweise den Amtssprachen der Gemeinschaft abgefasst sein, die gemäß dem Vertrag von dem Mitgliedsstaat, in dem die Maschine in den Verkehr gebracht und/oder in Betrieb genommen wird, bestimmt werden kann beziehungsweise können, und auf Verlangen können sie zusätzlich auch in jeder anderen vom Bedienpersonal verstandenen Amtssprache beziehungsweise Amtssprachen der Gemeinschaft abgefasst sein."

Folgende Anforderungen an Typenschilder gemäß DIN EN 60034-1 gelten:
"Jede elektrische Maschine muss mit einem Leistungsschild (mit Leistungsschildern) ausgerüstet sein. Die Schilder müssen aus dauerhaftem Material und sicher befestigt sein. Das Leistungsschild (die Leistungsschilder) muss (müssen) vorzugsweise am Gehäuse der Maschine befestigt sein und so angebracht werden, dass es (sie) in der Verwendungslage, wie sie Bauform und Aufstellung festlegen, leicht lesbar ist (sind). Wenn die elektrische Maschine so in das Gerät eingeschlossen oder eingezogen ist, dass ihr Leistungsschild nicht leicht lesbar ist, muss der Hersteller auf Verlangen ein zweites Schild liefern, das am Gerät zu befestigen ist."

Anforderungen an Warnschilder für drehzahlveränderliche Antriebe gemäß DIN EN 61800-2:
"Der Hersteller muss Sicherheits- und Warnschilder mitliefern und anbringen, wie es nach Regeln und Normen am Einsatzort der Ausrüstung (falls bekannt) und nach IEC 60204-1 gefordert wird. Sie müssen in der (den) entsprechenden Sprache(n) des Einsatzortes ausgeführt sein. Wenn der Einsatzort des Anwenders nicht bekannt ist, werden die Warnschilder mitgeliefert und nach den im Ursprungsland geltenden Regeln und Normen sowie IEC 60204-1 angebracht. Sie müssen in der (den) Sprache(n) des Ursprungslandes ausgeführt sein."

Anforderungen an Warnschilder und Betriebsmittelkennzeichen gemäß DIN EN 60204-1:
"Warnschilder, Typenschilder, Kennzeichnungen und Bezeichnungsschilder müssen von ausreichender Dauerhaftigkeit sein, um den jeweiligen Umweltbedingungen stand zu halten. Ausrüstung (z.B. Schaltgerätekombinationen) muss lesbar und dauerhaft so gekennzeichnet sein, dass die Kennzeichnung nach dem Einbau leicht erkennbar ist."

Anforderungen gemäß DIN EN 61800-5-1:
"Wenn kein internationales Symbol zur Verfügung steht, muss eine Bezeichnung
   - in einer geeigneten Sprache oder in einer Sprache, die mit einem besonderen technischen Gebiet verbunden ist, geschrieben sein;
   - unübersehbar, lesbar und dauerhaft sein;
   - prägnant und unverwechselbar sein."

Aus den oben zitierten Vorgaben resultieren folgende Problemstellungen und Lösungsansätze:
a) Die Varianz der zu erstellenden Schilder wird aufgrund länderspezifischer Anforderungen (Mehrsprachigkeit) immer größer. Die Schilder werden daher in der entsprechenden Varianz erstellt. Basisschilder werden vorgehalten.
b) Die Anzahl der abzubildenden Informationen wird immer größer (Warnhinweise, mehrsprachige Ausführung). Der zur Verfügung stehende Platz ist in der Regel jedoch begrenzt, womit zusätzliche Informationen nicht mehr in der üblichen und notwendigen Größe abgebildet werden können. Die Schilder werden daher immer größer. Es wird in der Regel ein Kompromiss zwischen Schriftgröße, Klartext und der Verwendung von Piktogrammen und Abkürzungen gefunden.
c) Wenn der Bestimmungsort zum Zeitpunkt der Produktion noch nicht bekannt ist, müssen zusätzliche Schilder für alle Amtssprachen des möglichen Bestimmungsortes beigelegt werden.
   Dem nachkommend, werden entsprechend zusätzliche Schilder und Beipackzettel in den Amtssprachen des möglichen Bestimmungsortes dem Produkt beigelegt. Für einen Frequenzumrichter der Anmelderin müssen beispielsweise derzeit Warnhinweise in 37 verschiedenen Sprachen beigefügt werden.
d) Wenn das Schild in der Verwendungslage nicht lesbar ist, muss ein identisches zusätzliches Schild dem Produkt beigelegt werden. Ein solches beigelegtes Schild wird dann vom Inbetriebsetzer aufgeklebt beziehungsweise angebracht.
e) Bei der Umrüstung von älteren Maschinen kann es notwendig sein, ein neues Typenschild zu erstellen. Dieses muss dem "Umrüstkit" bei Auslieferung beigelegt werden. Bei der Umrüstung muss daher in der Praxis sichergestellt werden, dass das neue Schild gegen das alte ausgetauscht wird.
f) Schilder in der heutigen Form sind nur über direkte Sichtverbindungen elektronisch lesbar (z.B. Bar-CodeLeser). Im Zuge der Digitalisierung wird eine Lesbarkeit ohne direkte Sichtverbindung immer wichtiger (z.B. beim Zoll beziehungsweise Warenein-/-ausgang, ohne die Verpackung zu öffnen, an unzugänglichen Stellen in einer Anlage oder während des Betriebs, ohne die Tür eines Schaltschrankes öffnen zu müssen). Diesbezüglich sind keine direkten Lösungen bekannt. Für den Zoll beziehungsweise Warenein-/-ausgang wird daher meist zusätzlich ein Schild auf die Verpackung geklebt.

Als Anzeigetechnik ist sogenanntes "Elektronisches Papier" (kurz E-Papier oder auch englisch kurz e-paper, E-Paper oder ePaper genannt) bekannt. Mit einem solchen Elektronischen Papier wird versucht, das Aussehen von Tinte beziehungsweise Farbe auf Papier nachzubilden. E-Paper-Displays reflektieren das Licht wie normales Papier, es sind also passive (nicht leuchtende) Anzeigen. In Anlehnung an den englischen Sprachgebrauch werden solche Bildschirme auch als reflektive Displays bezeichnet. Texte oder Bilder werden bei manchen Anzeigetechniken dauerhaft angezeigt, ohne dass dafür eine Erhaltungsspannung erforderlich ist. Die Anzeige kann jedoch zu einem späteren Zeitpunkt geändert werden. Elektronisches Papier ist bei einigen Herstellern - ähnlich wie normales Papier - biegsam (Quelle: https://de.wikipedia.org/wiki/Elektronisches Papier).

E-Paper-Displays arbeiten nach dem Prinzip, dass sie elektrisch geladene und pigmentierte Partikel in einer Mikrokapsel durch Anwendung eines Spannungsfeldes ausrichten. Beim Konstruieren von E-Paper-Modulen verbindet der Entwickler eine FPL-Folie (Front Plane Laminate - enthält die Mikrokapseln) mit einer Aktiv-Matrix-TFT-Backplane und versiegelt beide mit einer Schutzfolie. Mit der TFT-Backplane unterteilt er das FPL in die vorgegebene Auflösung und bringt es mit dem integrierten Graphik-Controller in die gewünschte Bilddarstellung. Das Ansteuern der Panels erfolgt über den integrierten Chip-on-glass-IC und der Timing-Control-Software. Die Software befindet sich entweder auf dem Hauptprozessor oder einem separaten Tcon-PCB beziehungsweise Chip.

Die Optik und Lesbarkeit sind unabhängig vom Blickwinkel, können ausgezeichnet Graustufen darstellen und bieten einen Kontrast, der mit bedrucktem, weißem Papier vergleichbar ist. Da E-Paper eine reflexive Technik ist, ist die Lesbarkeit bei Sonneneinstrahlung ausgezeichnet.

E-Paper mit einer zusätzlichen Farbe zu Schwarz und Weiß wie z.B. Rot oder andere Farben sind heute schon machbar und stehen kurz vor der Serieneinführung.

Die angezeigten Inhalte können per Funkverbindung wie z.B. WLAN, ZigBee, Bluetooth, NFC (Near Field Communication) elektronisch ausgelesen werden. Die Programmierung ab Werk kann ebenfalls über Funk erfolgen. Im Gegensatz zu vielen Displaytechniken kann E-Paper QR- und 3D-Barcodes darstellen und ist durch IR- oder Laser-Reader ablesbar. Damit eignen sie sich perfekt für Logistik-Anwendungen oder aktive Preisschilder in Läden (Stichwort ESL: Electronic Shelf Label).

In einer weiteren Anwendung für E-Paper-Displays wurde von der Firma Densitron am Flughafen London-Heathrow ein elektronisches Gepäcketikett entwickelt, das den traditionellen BA-Barcode-Anhänger aus Papier ersetzen soll. Die E-Paper-Displays benötigen nur beim Aktualisieren der Anzeige Strom, sodass sie sich nahezu beliebig oft weiterverwenden lassen. Über NFC kommunizieren die Etiketten mit dem Mobiltelefon des Reisenden.

Die Aufgabe der vorliegenden Erfindung besteht darin, die länderspezifische Kennzeichnung von Vorrichtungen zu vereinfachen.

Erfindungsgemäß wird diese Aufgabe gelöst durch eine Anordnung mit
- einer Vorrichtung und
- einer Anzeigeeinrichtung, die ein Elektronisches Papier aufweist und an der Vorrichtung befestigt ist, wobei
- die Anzeigeeinrichtung ein Lokalisierungsmodul aufweist, mit dem eine Landesinformation über dasjenige Land ermittelbar ist, in dem sich die Anordnung aktuell befindet, und
- die Anzeigeeinrichtung dazu ausgebildet ist, vorgegebene Daten über die Vorrichtung spezifisch in Abhängigkeit von der Landesinformation darzustellen. Der Begriff "Land" wird hier auch stellvertretend für z.B. eine Region verstanden.

In vorteilhafter Weise wird also eine Vorrichtung beziehungsweise ein Gerät mit dem sogenannten "Elektronischen Papier" versehen, dessen Anzeige variabel ist. Die Anzeigeeinrichtung verfügt über ein Lokalisierungsmodul, mit dem der geographische Standort der Anzeigeeinrichtung bestimmt werden kann. Diese geographischen Positionsdaten können durch das Lokalisierungsmodul beispielsweise direkt aus GPS-Daten oder indirekt aus IP-Adressen des umgebenden WLAN oder bei GSM (oder auch andere Funkübertragungsstandards, z.B. UMTS) über Daten von einer Funkzelle oder auf ähnliche Weise gewonnen werden. Anhand des Standorts kann automatisch auf das Land geschlossen werden, in dem sich die Anzeigeeinrichtung befindet. Somit kann eine Landesinformation über den aktuellen Standort bereitgestellt werden. Anhand der Landesinformation lässt sich dann die Anzeige auf dem Elektronischen Papier landesspezifisch gestalten. So kann beispielsweise ein Typenschild oder ein Warnhinweisschild gemäß einer oder mehrerer obiger Normen in der Amtssprache des jeweiligen Landes angezeigt werden.

Vorzugsweise besitzt die Anzeigeeinrichtung einen eigenen Energiespeicher, mit dem sie autark betreibbar ist. In der Anzeigeeinrichtung kann somit ein Kondensator oder eine Batterie vorgesehen sein, welche die Energieversorgung unabhängig von der Vorrichtung, die durch das Elektronische Papier gekennzeichnet werden soll, betrieben werden.

In einer Ausgestaltung umfasst die Vorrichtung eine Werkzeugmaschine, eine Produktionsmaschine, einen Frequenzumrichter, eine (elektrische) Maschine, ein Getriebe, eine Steuerung, eine Komponente davon (z.B. Ventil) oder Ähnliches. Gegebenenfalls umfasst die Vorrichtung auch mehrere von diesen Komponenten. Als elektrische Maschine wäre ein Motor, ein Generator oder ein Transformator denkbar. Eine solche Vorrichtung kann aber auch eine komplexere Einheit aus einer Vielzahl solcher Komponenten sein.

Gemäß einer weiteren Ausgestaltung weist die Anzeigeeinrichtung eine Drahtlosschnittstelle zum Empfangen und/oder Senden von anzuzeigenden Daten auf. Dies bedeutet, dass die Daten, die auf dem Elektronischen Papier angezeigt werden sollen, wie etwa Typeninformationen oder Warnhinweise, bereits bei der Fertigung im Werk oder auch für den Servicefall drahtlos auf die Anzeigeeinrichtung übertragen werden können. Alternativ kann natürlich auch eine drahtgebundene Datenübertragung erfolgen, wenn dies die Anzeigeeinrichtung so vorsieht. Besondere Vorteile ergeben sich, wenn die in der Anzeigeeinrichtung gespeicherten Informationen z.B. bei fehlender Sichtverbindung drahtlos an ein externes Gerät übertragen werden können. Das Senden der Daten kann an ein mobiles Anzeigegerät (z.B. Smartphone) oder auch an eine andere Komponente oder Maschine erfolgen, um die Daten des Gerätes aus einer gewissen Entfernung zu erfassen (mit oder auch ohne Sichtverbindung).

Gegebenenfalls weist die Anzeigeeinrichtung ein Bedienelement auf, dessen Bedienung ein Gewinnen der Landesinformation durch das Lokalisierungsmodul hervorruft. Dies bedeutet, dass das Gewinnen der Landesinformation beziehungsweise des Standorts der Anzeigeeinrichtung durch die Bedienung eines Bedienelements ausgelöst werden muss. Dadurch lässt sich eine sehr energiesparende Aktualisierung der Landesinformation realisieren.

Alternativ kann das Lokalisierungsmodul aber auch dazu ausgebildet sein, die Landesinformation in vorgegebenen Zeitabständen automatisch zu gewinnen. Dies hat den Vorteil, dass sich das Bedienpersonal beziehungsweise der Benutzer nicht damit auseinanderzusetzen braucht, wie die auf dem Elektronischen Papier dargestellten Informationen gemäß dem aktuellen Standort landesspezifisch wiedergegeben werden können. Vielmehr stellt das Elektronische Papier hier die Informationen automatisch so dar, wie es in dem Land notwendig ist, in dem sich die Anzeigeeinrichtung momentan befindet. Insbesondere wird für Texte die einschlägige Amtssprache gewählt. Vorzugsweise sieht die Anzeigeeinrichtung die Möglichkeit vor, die Sprache auch manuell zu wählen.

In einer weiteren Ausführungsform kann die Anzeigeeinrichtung dazu ausgebildet sein, die Anzeigerichtung auf eine Bedienhandlung hin oder automatisch in Abhängigkeit von der Lage der Anzeigeeinrichtung zu ändern. Beispielsweise wird die Anzeige um 90 Grad gedreht, wenn ein Bedienknopf gedrückt wird. Alternativ kann die Anzeigeeinrichtung aber auch beispielsweise ein gyroskopisches Element aufweisen, das automatisch die Vertikal- oder Horizontalrichtung bestimmt und in Abhängigkeit davon die Anzeigerichtung der Anzeige automatisch einstellt.

In einer vorteilhaften Ausgestaltung weist die Anzeigeeinrichtung ein Beleuchtungselement zum Beleuchten einer Anzeige der Anzeigeeinrichtung auf. Dies ist insbesondere dann von Vorteil, wenn die Anordnung in einem wenig beleuchteten Bereich aufgestellt ist, sodass das Elektronische Papier auch bei geringer Umgebungsbeleuchtung abgelesen werden kann.

Des Weiteren kann die Anzeigeeinrichtung eine Berechtigungsüberprüfungseinheit aufweisen, mit der eine Berechtigung eines Zugangs zu einer Datenverarbeitungseinheit der Anzeigeeinrichtung überprüfbar ist. So kann beispielsweise ein Zugangscode oder ein Passwort bei dem datentechnischen Zugang zu der Anzeigeeinrichtung überprüft werden. Auf diese Weise lässt sich sicherstellen, dass Änderungen nur getätigt beziehungsweise Daten nur hinterlegt und gelöscht werden können, wenn der Bediener eine entsprechende Berechtigung besitzt.

Die Anzeigeeinrichtung kann eine Datenschnittstelle zu der Vorrichtung aufweisen und dazu ausgebildet sein, auf eine Bedienhandlung der Anzeigeeinrichtung hin aktualisierte oder nach einem vorgegebenen Zeitintervall aktualisierte Zustandsinformationen über die Vorrichtung optisch anzuzeigen. Dies bedeutet, dass die Anzeigeeinrichtung direkt Daten von der Vorrichtung empfangen und gegebenenfalls weiterverarbeitet darstellen kann. Somit dient die Anzeigeeinrichtung auch als optische Schnittstelle für einen Bediener bzw. Nutzer zu der Vorrichtung.

Ferner kann die Anzeigeeinrichtung mindestens ein Sensorelement zur Erfassung von Zustandsdaten über die Vorrichtung aufweisen. Dies bedeutet, dass die Anzeigeeinrichtung selbst als Sensor dienen kann, um Daten von der Vorrichtung zu erfassen und anzuzeigen.

Die oben genannte Aufgabe wird außerdem gelöst durch ein Verfahren zum Anzeigen einer Information über eine Vorrichtung mittels einer Anzeigeeinrichtung, die ein Elektronisches Papier aufweist und an der Vorrichtung befestigt ist, durch
- automatisiertes Lokalisieren durch die Anzeigeeinrichtung, indem eine Landesinformation über dasjenige Land ermittelt wird, in dem sich die Vorrichtung aktuell befindet, und
- Darstellen von vorgegebenen Daten über die Vorrichtung auf der Anzeigeeinrichtung spezifisch in Abhängigkeit von der Landesinformation.

Analog zu den Vorteilen und Weiterbildungen der oben genannten Anordnung ergeben sich auch entsprechende Vorteile und Weiterbildungen für das erfindungsgemäße Verfahren. Dabei sind die im Zusammenhang mit der Anordnung geschilderten funktionellen Merkmale als Verfahrensmerkmale für das Verfahren zu sehen.

Die vorliegende Erfindung wird nun anhand der beigefügten Zeichnungen näher erläutert, in denen zeigen:
- FIG 1: ein beispielhaftes Typenschild;
- FIG 2: ein Beispiel einer erfindungsgemäßen Anordnung mit Motor und Anzeigeeinrichtung, und
- FIG 3: ein Blockschaltdiagramm einer Anzeigeeinrichtung.

Die nachfolgend näher geschilderten Ausführungsbeispiele stellen bevorzugte Ausführungsformen der vorliegenden Erfindung dar. Dabei ist zu beachten, dass die geschilderten Merkmale nicht nur in den erwähnten Kombinationen, sondern auch in Alleinstellung oder in anderen technisch sinnvollen Kombinationen realisiert werden können.

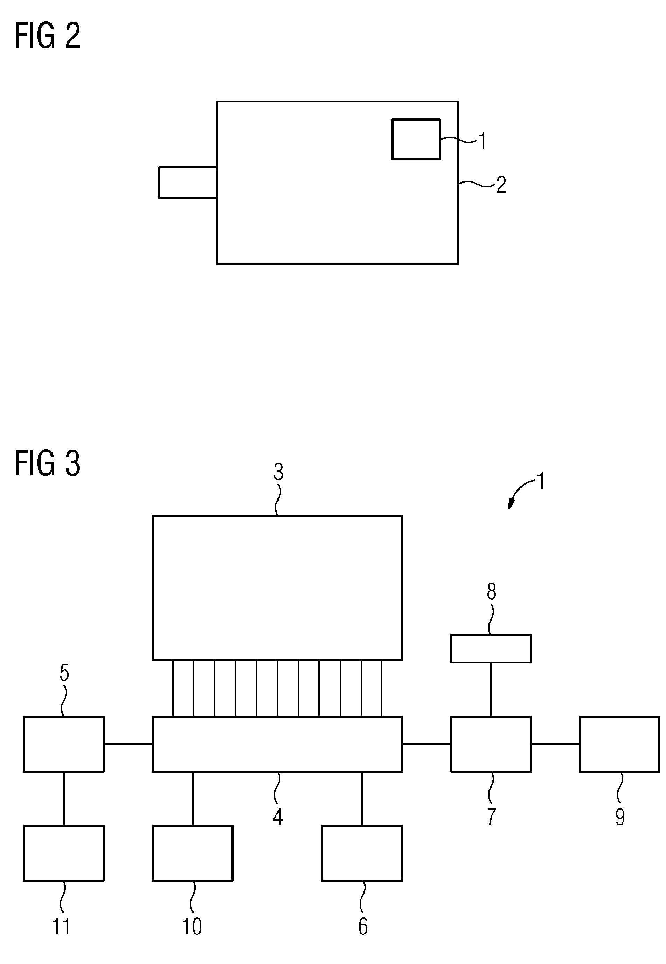

FIG 2 zeigt eine Vorrichtung mit einer Anzeigeeinrichtung 1, die zusammen ein Beispiel einer erfindungsgemäßen Anordnung darstellen. Bei der Vorrichtung handelt es sich hier um einen Motor 2. Die Anzeigeeinrichtung 1 ist fest an dem Motor 2 angebracht. Die Anzeigeeinrichtung 1 besitzt ein Display, das als Elektronisches Papier (E-Paper) ausgebildet ist. Außerdem besitzt die Anzeigeeinrichtung 1 ein Lokalisierungsmodul beispielsweise auf der Basis von GPS, um den aktuellen Standort des Motors 2 zu erfassen. Das Lokalisierungsmodul ist in der Lage, die Standortinformation des Motors einem Land zuzuordnen, in dem sich der Motor gerade befindet. Auf dem E-Paper wird dann beispielsweise das Typenschild von FIG 1 in derjenigen Sprache dargestellt, die die Amtssprache des Landes darstellt, in dem sich der Motor 2 gerade befindet. Anstelle des Typen- beziehungsweise Leistungsschilds kann aber auch beispielsweise ein Warnhinweisschild durch das E-Paper-Display dargestellt werden. Gegebenenfalls besitzt die Anzeigeeinrichtung 1 auch mehrere solche E-Paper-Displays, um sowohl ein Typenschild als auch ein Warnhinweisschild in der aktuellen Amtssprache wiederzugeben.

Das E-Paper-Display beziehungsweise die gesamte Anzeigeeinrichtung 1 sollte in geeigneter Weise an der Maschine beziehungsweise Vorrichtung dauerhaft befestigt sein. Außerdem sollte das E-Paper-Display der Anzeigeeinrichtung 1 auf geeignete Weise (z.B. Gehäuse, durchsichtige Abdeckung, Folie etc.) gegen Umgebungseinflüsse wie Temperatur, mechanische Einflüsse, Feuchtigkeit, Schadgase, Salze et cetera in der eingesetzten Umgebung geschützt sein.

FIG 3 zeigt ein schematisches Blockschaltbild einer Anzeigeeinrichtung 1. Sie besitzt das bereits erwähnte E-Paper-Display 3. Dieses E-Paper-Display 3 ist in üblicherweise mit einer Ansteuerelektronik 4 verbunden, die wie auch die folgenden Komponenten zu der Anzeigeeinrichtung 1 gemäß dem vorliegenden Beispiel gehören. Prinzipiell können aber auch andere Hardwarelösungen gefunden werden.

An die Ansteuerelektronik 4 ist ein Mikroprozessor 5 mit Datenspeicher angeschlossen. Ebenso ist an die Ansteuerelektronik 4 beziehungsweise an den Mikroprozessor 5 ein Lokalisierungsmodul 6 angeschlossen, mit dem der Standort der Anzeigeeinrichtung 1 und damit der Standort der Vorrichtung, die mit der Anzeigeeinrichtung 1 ausgestattet ist, automatisch bestimmt werden kann.

Die Stromversorgung der Anzeigeeinrichtung 1 kann durch ein spezielles Stromversorgungsmodul 7 gewährleistet werden. Dieses Stromversorgungsmodul 7 erhält seine Energie beispielsweise von einer Batterie 8 oder einem (nicht dargestellten) Kondensator (z.B. Goldcap). Die Nachladung der Batterie 8 kann, wenn dies über die Lebenszeit notwendig ist, mittels einer sogenannten "Energieharvesting"-Einheit 9 erfolgen. Eine solche Einheit 9 wäre beispielsweise mit einem thermoelektrischen Element, einem Piezoelement, einer induktiven Energieauskopplung oder durch ein Solarpanel realisierbar. Gegebenenfalls könnte aber auch zeitweise ein Anschluss an eine externe Spannungsquelle (Stromversorgung) erfolgen. Außerdem könnte die Energie auch von der Vorrichtung, an der die Anzeigeeinrichtung 1 angebracht ist, bezogen werden.

Die anzuzeigenden Informationen beziehungsweise Daten werden vorzugsweise in der Anzeigeeinrichtung 1 selbst, z.B. in einem mit dem Display 3 verbunden Embedded-System (beispielsweise in den Mikroprozessor 5 integriert) gespeichert. Die Informationen können bei Bedarf aber auch online vorzugsweise über Funk übertragen werden, z.B. von einem Server oder einer Cloud.

Kann die gesamte gewünschte Information nicht auf einer Seite komplett angezeigt werden, so kann entweder ein Scroll- oder ein alternierender Anzeigemodus die Informationen für eine bestimmte Zeit im Wechsel anzeigen. Da der Wechsel der Anzeigeinformationen Energie benötigt, sollte dieser nur auf Anforderung auszuführen sein oder nur bei ausreichend zur Verfügung stehender Energie. Die Anforderung zum Anzeigewechsel kann auf verschiedenste Weise erfolgen, nämlich beispielsweise durch einen lokal angebrachten Taster, drahtlos über eine Funk- oder auch optische Verbindung, durch Gestensteuerung, durch Sprachsteuerung, durch Berührung des Displays 3 und Wischgesten oder ähnliches.

In einer Ausführungsvariante werden die Informationen voreingestellt immer in der Amtssprache des Landes, in der sich die Maschine gerade befindet, angezeigt. Der Länderstandort wird mithilfe des Lokalisierungsmoduls, das mit dem E-Paper-Display gekoppelt ist, automatisch ermittelt. Beispielhaft arbeiten Lokalisierungsmodule 6 auf der Basis von GPS, oder sie sind als UMTS/LTE-Funkmodule zur Ermittlung einer Funkzelle realisiert. Bei Bedarf kann auch auf jede beliebige andere abgespeicherte Sprache durch den Bediener umgeschaltet werden. Andere Arten des Umschaltens sind oben erwähnt.

Wie eingangs erwähnt wurde, müssen Typenschilder in der Einbaulage der Vorrichtung (z.B. des Motors 2) ausgelesen werden können. Lässt die Einbaulage der Vorrichtung kein Ablesen des E-Paper-Displays zu, so können die angezeigten Informationen gedreht werden (z.B. +/- 90 Grad, 180 Grad). Ein solches Drehen kann auf einen Knopfdruck hin oder automatisch durch eine integrierte Gyroskopfunktion ähnlich wie bei Smartphones erfolgen.

Ist das Ablesen des E-Paper-Displays trotzdem nicht möglich, so können die Informationen optional drahtgebunden (z.B. USB, Ethernet) oder auch drahtlos (Funk, optisch, akustisch) an ein anderes geeignetes Anzeigegerät (z.B. Smartphone, anderes E-Paper-Display, VR-Brille) übertragen werden. Für die Drahtlosübertragung kann die Anzeigeeinrichtung 1 eine spezielle Drahtlosschnittstelle 10 aufweisen. Das drahtlose oder drahtgebundene Auslesen der Informationen ist ohne Weiteres möglich, da die anzuzeigenden Informationen für das E-Paper-Display zwangsläufig auch in elektronischer/digitaler Form vorliegen.

Bei bestehender Sichtverbindung kann das elektronische/digitale Auslesen der Informationen auch optisch über die Anzeige von Barcodes, QR-Codes oder andere Formate mittels entsprechender Auswertegeräte erfolgen.

Für schlechte Beleuchtungsverhältnisse kann das E-Paper-Display mit einer aktiven Beleuchtung ausgestattet werden. Diese kann beispielsweise durch einen Taster, eine Gestensteuerung, ein Berühren des Display oder dergleichen für eine vorbestimmte Zeit aktiviert werden.

Die auf dem E-Paper-Display anzuzeigenden Informationen sollten nur durch den Hersteller der Vorrichtung beziehungsweise dessen Servicepersonal änderbar sein. Dafür sind entsprechende Sicherheitsvorkehrungen vorzusehen, wie z.B. Zugangscodes oder elektronischer Schlüssel zum Ändern der abgespeicherten Informationen.

Die Anzeigeeinrichtung 1 kann neben statisch hinterlegten Informationen auch veränderliche Zustandsinformationen der Vorrichtung beziehungsweise Maschine anzeigen, wenn die Anzeigeeinrichtung 1 entsprechend ausgebaut ist. Dazu wäre beispielsweise eine optionale Zustandserfassungseinheit 11 beziehungsweise ein Sensorelement vorzusehen, mit der beispielsweise eine Sensorauswertung durchführbar ist. Diese Zustandserfassungseinheit 11 kann an den Mikroprozessor 5 angeschlossen sein. Die Zustandsinformationen kann die Anzeigeeinrichtung 1 also gegebenenfalls selbst erfassen (z.B. durch integrierte Temperatur- oder Vibrationssensorik). Diese Informationen können aber auch durch ein zusätzlich an der Vorrichtung installiertes "Embedded"-System erfasst und an die Anzeigeeinrichtung 1 übertragen werden. Geeignet zur Erfassung und Darstellung auf dem E-Paper-Display sind langsam veränderliche Zustände, wie z.B. die Anzeige einer Ampelfarbe, aber auch kontinuierlich veränderliche Informationen (z.B. Drehzahl, Temperatur).

In vorteilhafter Weise kann durch die Erfindung somit erreicht werden, dass es praktisch keine Varianz in den Schildern innerhalb einer Produktreihe mehr gibt, da die Schilder sich nur durch den anzuzeigenden Inhalt unterscheiden. Das Beschreiben kann während der Produktion schrittweise von einem Produktionsschritt zum nächsten erfolgen. Änderungen in der Konfiguration des Produkts sind während des Fertigungsprozesses möglich. Darüber hinaus werden keine Beipackzettel mehr für Warn- und Sicherheitshinweise benötigt, wenn neben den Informationen eines Typenschilds auch die Warnhinweise auf der Anzeigeeinrichtung 1 dargestellt werden.

In bevorzugter Ausgestaltung wird immer die richtige Amtssprache des Landes, in der sich die Maschine gerade befindet, angezeigt. Ein weiterer Vorteil besteht darin, dass Typenschildinformationen bei Umrüstungen von Maschinen durch das Servicepersonal vor Ort geändert und ergänzt werden können. Darüber hinaus können bei begrenzten Platzverhältnissen für das Schild durch alternierende Anzeigen mehr Informationen als bei herkömmlichen Schildern angezeigt werden. Ferner müssen der Maschine beziehungsweise Vorrichtung keine zusätzlichen Schilder mehr beigelegt und bei der Aufstellung der Vorrichtung aufgeklebt werden. Die Gefahr, dass ein falsches Schild aufgeklebt wird, besteht also nicht mehr.

Ebenso vorteilhaft ist, dass der Zoll- oder Warenein-/-ausgang feststellen kann, welches Produkt sich wirklich in der Verpackung befindet (was heute noch ein Problem bei der Logistik darstellt), indem die Informationen beispielsweise über Funk ausgelesen werden. Ein besonderer Vorteil der erfindungsgemäßen Anordnung besteht aber darin, dass nicht zwingend eine Stromversorgungszufuhr von außen benötigt wird wie bei herkömmlichen Displays, da der Energiebedarf von Elektronischem Papier äußerst gering ist (nur beim Wechsel der Anzeige). Das Nachladen kann einfach durch "Energy Harvesting" an der Vorrichtung (z.B. Antriebskomponente) erfolgen.

## Patentansprüche

1. Anordnung mit
- einer Vorrichtung (2) und
- einer Anzeigeeinrichtung (1), die ein Elektronisches Papier (3) aufweist und an der Vorrichtung (2) befestigt ist,
**dadurch gekennzeichnet, dass**
- die Anzeigeeinrichtung (1) ein Lokalisierungsmodul (6) aufweist, mit dem eine Landesinformation über dasjenige Land ermittelbar ist, in dem sich die Anordnung aktuell befindet, und
- die Anzeigeeinrichtung (1) dazu ausgebildet ist, vorgegebene Daten über die Vorrichtung (2) spezifisch in Abhängigkeit von der Landesinformation darzustellen.

2. Anordnung nach Anspruch 1, wobei die Anzeigeeinrichtung (1) einen eigenen Energiespeicher (8) aufweist, mit dem sie autark betreibbar ist.

3. Anordnung nach Anspruch 1 oder 2, wobei die Vorrichtung (2) eine Werkzeugmaschine, eine Produktionsmaschine, einen Frequenzumrichter, eine elektrische Maschine, ein Getriebe, eine Steuerung oder eine Komponente davon umfasst.

4. Anordnung nach einem der vorhergehenden Ansprüche, wobei die Anzeigeeinrichtung (1) eine Drahtlosschnittstelle (10) zum Empfangen und/oder Senden von anzuzeigenden Daten aufweist.

5. Anordnung nach einem der vorhergehenden Ansprüche, wobei die Anzeigeeinrichtung (1) ein Bedienelement aufweist, dessen Bedienung ein Gewinnen der Landesinformation durch das Lokalisierungsmodul hervorruft.

6. Anordnung nach einem der Ansprüche 1 bis 4, wobei das Lokalisierungsmodul (6) dazu ausgebildet ist, die Landesinformation in vorgegebenen Zeitabständen automatisch zu gewinnen.

7. Anordnung nach einem der vorhergehenden Ansprüche, wobei die Anzeigeeinrichtung (1) dazu ausgebildet ist, die Anzeigerichtung auf eine Bedienhandlung hin oder automatisch in Abhängigkeit von der Lage der Anzeigeeinrichtung (1) zu ändern.

8. Anordnung nach einem der vorhergehenden Ansprüche, wobei die Anzeigeeinrichtung (1) ein Beleuchtungselement zum Beleuchten einer Anzeige der Anzeigeeinrichtung aufweist.

9. Anordnung nach einem der vorhergehenden Ansprüche, wobei die Anzeigeeinrichtung (1) eine Berechtigungsüberprüfungseinheit aufweist, mit der eine Berechtigung eines Zugangs zu einer Datenverarbeitungseinheit (5) der Anzeigeeinrichtung (1) überprüfbar ist.

10. Anordnung nach einem der vorhergehenden Ansprüche, wobei die Anzeigeeinrichtung (1) eine Datenschnittstelle zu der Vorrichtung (2) aufweist und dazu ausgebildet ist, auf eine Bedienhandlung der Anzeigeeinrichtung (1) hin aktualisierte oder nach einem vorgegebenen Zeitintervall aktualisierte Zustandsinformation über die Vorrichtung (2) optisch anzuzeigen.

11. Anordnung nach einem der vorhergehenden Ansprüche, wobei die Anzeigeeinrichtung (1) mindestens ein Sensorelement (11) zur Erfassung von Zustandsdaten über die Vorrichtung aufweist.

12. Verfahren zum Anzeigen einer Information über eine Vorrichtung (2) mittels einer Anzeigeeinrichtung (1), die ein Elektronisches Papier (3) aufweist und an der Vorrichtung (2) befestigt ist,
**gekennzeichnet durch**
- automatisiertes Lokalisieren **durch** die Anzeigeeinrichtung (1), indem eine Landesinformation über dasjenige Land ermittelt wird, in dem sich die Vorrichtung (2) aktuell befindet, und
- Darstellen von vorgegebenen Daten über die Vorrichtung (2) auf der Anzeigeeinrichtung (1) spezifisch in Abhängigkeit von der Landesinformation.
